# EUROPEAN PATENT APPLICATION

(11) **EP 2 978 095 A1**
(43) Date of publication of application: **27.01.2016**
(21) Application number: 14178168.2
(22) Date of filing: 23.07.2014
(51) Int. Cl.: H02J 3/24, G01R 19/25, H02J 3/00

(54) **Power system operation**

(71) Applicant: ABB Technology AG, 8050 Zürich (CH)
(72) Inventor: Adamantios, Marinakis, 5442 Fislisbach (CH); Larsson, Mats, 5405 Baden-Dättwil (CH); Harvan, Matus, Zürich 8057 (CH); Locher, Thomas, 8050 Zürich (CH)
(74) Representative: ABB Patent Attorneys

(57) **Abstract**

The present invention proposes to couple information from a Wide-Area Monitoring System WAMS and from a Supervisory Control And Data Acquisition SCADA system of a power system, such that a Security Status of the power system as observed from WAMS security indicators is associated, or correlated, with the static Operating Point of the power system as observed by SCADA operating state variables. Specifically, a candidate OP of the power system may be classified as insecure if an associated security indicator such as a damping ratio of a least-damped inter-area oscillation falls below a limit. Sophisticated data mining or machine learning techniques handle the potentially overwhelming amount of data involved in the proposed processes in an efficient and scalable manner.

## Description

### FIELD OF THE INVENTION

The invention relates to an operation of power systems that are monitored, based on time-synchronized phasor data, by Wide Area Monitoring Systems and controlled, based on operating state data, by Supervisory Control And Data Acquisition systems.

### BACKGROUND OF THE INVENTION

Wide-Area Monitoring Systems (WAMS), relying on time-synchronized measurements collected from Phasor Measurement Units (PMU), provide Transmission System Operators (TSO) with real-time information regarding the security status of their respective electrical power transmission systems. Typical applications include the monitoring of oscillation modes with their corresponding damping ratios and the monitoring of voltage stability over transmission corridors. Having a WAMS in operation allows a TSO to know in real-time whether its system is at, or close to, an insecure operating state as identified by the computation of a set of security indicators. This computation is performed in real-time by the WAMS, based on the PMU measurements. Generally, a power system is secure if it can withstand a contingency without the latter resulting in system instability or violation of operating limits.

Exemplary security indicators include damping ratios of inter-area electromechanical oscillations and system quantities indicative of voltage stability, based on an equivalent circuit or average line temperature of a power transmission corridor or line, respectively. The patent application EP 1489714 is directed to the detection of power system oscillations based on adaptive Kalman filter techniques, and to the determination of frequency and damping ratio of an oscillation mode.

The patent application EP 1408595 discloses an exemplary voltage stability assessment of a transmission corridor or transmission section of an electrical network. It includes measuring, by means of at least two synchronized phasor measurement units residing at two interfaces of the corridor, a voltage phasor at the interface and a phasor of a current flowing through the interface, and computing, from said voltage and current phasors, values of impedances constituting an equivalent circuit representing the transmission section.

The patent application EP 1324454 discloses an exemplary power line thermal and stability limit estimation with PMU. Specifically a system for determining an operational limit of a power transmission line from time-stamped current phasor and voltage phasor information for a first end and a second end of the line, comprising a data processing device and means for computing an ohmic resistance R of the line from the phasor information, and computing an average line temperature T1 from the ohmic resistance R.

An Operating Point (OP), or operating state (OS), of the power system is supervised by a Supervisory Control And Data Acquisition (SCADA) system typically independent of the WAMS. This involves the gathering of steady-state information of operating state variables, or quantities, such as bus voltages and currents, power generation schedules, active and reactive power injections or withdrawals at substations, branch active and reactive power flows, device status and power system topology information. Values of these operating state variables may be obtained by means of measurement devices suitably distributed over the power system, or derived from such measurements, for instance by means of state estimation. In addition, power generation schedules may be obtained from a market dispatch tool, or generated by an Optimal Power Flow (OPF) or economic dispatch tool of an Energy Management System (EMS) coupled to the SCADA system. Specifically, non-measured static configuration parameters such as line impedances and generator capability parameters, as well as controller settings of power flow control equipment as decided by the TSO are considered as steady-state device status information. Raw data sets are cleaned and properly processed such that snapshots of the OS of the power system are available to the TSO.

The patent application EP 06405089 discloses a Remote Terminal Unit (RTU) comprising first data acquisition means for acquiring, at a first sampling rate below a network frequency of the power system, first network data or operating state variables to be evaluated by a SCADA system managing an electric power system. The RTU comprises a synchronization means providing time-stamps for global time synchronization and second data acquisition means for acquiring, at a second sampling rate above said first sampling rate, time-stamped synchronized phasor data.

In short, the SCADA system provides a static picture of the observed power system, while the WAMS focuses on a dynamic behavior of the power system and eventually makes computed security indicators available to the TSO in real-time. However, the WAMS does not provide any information regarding the cause of an event, nor does it propose proper countermeasures on behalf of the TSO. At present, a computationally complex, dynamic simulation that relies on an adequate modelling of the power system appears to be the only possibility for the TSO to investigate a security or stability of the power system.

### DESCRIPTION OF THE INVENTION

It is an objective of the invention to enable mitigation of insecure operating points of a power system without delay. This objective is achieved by a method of operating the power system according to the independent claim. Preferred embodiments are evident from the dependent patent claims.

The invention proposes to couple information from a Wide-Area Monitoring System WAMS and from a Supervisory Control And Data Acquisition SCADA system of the power system, such that a Security Status SS of the power system as observed from WAMS security indicators is associated, or correlated, with the static Operating Point OP of the power system as observed by SCADA operating state variables. Sophisticated data mining or machine learning techniques may handle the potentially overwhelming amount of data involved in the proposed processes in an efficient and scalable manner. In addition to data gathered from real operation of the power system, the proposed analysis may also be applied to data produced by simulations using a physical model of the power system. Suitable simulations could even assess transient stability issues after an event not covered by conventional WAMS security indicators.

According to the invention, a method of operating an electrical power transmission system that is monitored, based on time-synchronized phasor data, by a WAMS and that is controlled, based on operating state data, by a SCADA system, comprises the steps of
- collecting and recording time-synchronized phasor data from PMUs of the WAMS distributed over the power system,
- calculating, from the phasor data, power system security indicator data including a series of values of a first security indicator,
- collecting and recording operating state data different from the phasor data, and including a series of values for each of a first plurality of operating state variables,
- associating, specifically aligning time-wise, or correlating, the security indicator data and the operating state data,
- training, by means of machine learning and based on the associated data, a regression or classification model that links the first security indicator to the first plurality of operating state variables, and
- predicting, based on the trained model, a value of the first security indicator for an operating point of the power system, the operating point being determined by a set of values, or by an instance, of the first plurality of operating state variables.

In the present context and by way of definition, an OP of the power system is considered secure if a binary SS consolidating some or all of the WAMS security indicators indicates so, and insecure otherwise. By way of example, a candidate OP of the power system may be classified as insecure if an associated security indicator such as a damping ratio of a least-damped inter-area oscillation falls below a certain limit. The SS in turn is secure if all the WAMS security indicators are within some predefined values, thereby disregarding any security information that does not originate from the WAMS. The OP is derived from steady-state values of operating state variables including at least one of bus voltages and currents, power generation schedules, active and reactive power injections or withdrawals at substations, branch active and reactive power flows, device status and power system topology information.

In a preferred embodiment, the method further comprises
- observing, during regular operation of the power system and from current security indicator data, the power system to be in an insecure operating point, specifically by one or more security indicators deviating from normal;
- identifying a next operating point as being secure based on a value of the security indicator predicted for this next operating point; and
- operating the power system according to the set of values of the first plurality of operating state variables determining the next operating point, specifically by modifying and dispatching actuator set point values accordingly.

Advantageous embodiments of the invention are directed to, as an inherent element of the model training procedure, the capability of extracting the relevant input features of each security indicator, as well as to a systematic approach to train different regression or classification models for each individual security indicator. The various models may be used as an ensemble or complementary to each other, depending on an intended purpose.

Ultimately, the invention allows a Transmission System Operator TSO to operate the power system more efficiently, and enables the TSO to react more quickly in case of a security incident, even in an automated manner, based on more detailed insights into the current, insecure operating point as well as into alternative, secure operating points.

The present invention also relates to a computer program product including computer program code for controlling one or more processors of a transmission system operating device connected to a data archive comprising WAMS and SCADA data of the transmission system, particularly, a computer program product including a computer readable medium containing therein the computer program code.

### BRIEF DESCRIPTION OF THE DRAWINGS

The subject matter of the invention will be explained in more detail in the following text with reference to preferred exemplary embodiments which are illustrated in the attached drawings, in which:
Fig.1 schematically shows a possible architecture of the components interaction;
Fig.2 depicts the evolution over time of an exemplary security indicator; and
Fig.3 is a flowchart of a real-time correction of an insecure Operating Point.

### DETAILED DESCRIPTION OF PREFERRED EMBODIMENTS

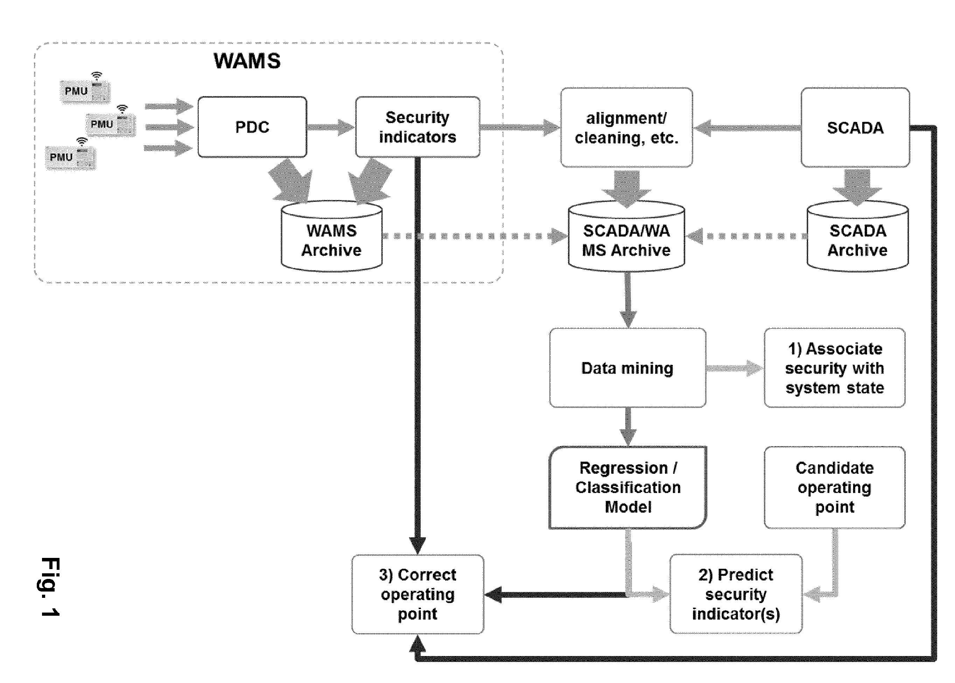

Fig.1 shows a possible system architecture according to an embodiment of the invention. In the upper-left corner a classical Wide Area Monitoring System (WAMS) is represented. Phasor Measurement Unit (PMU) data are communicated either directly or via intermediate Phasor Data Concentrators (PDC) to a security indicator computation unit. The security indicators are, first, made available to the Transmission System Operator (TSO) in real-time (not depicted) and, second, stored for future use in a WAMS archive. Typically unrelated to the WAMS, Supervisory Control And Data Acquisition (SCADA) data are collected, processed in real-time, and stored for future use in a SCADA archive, as depicted in the upper-right corner of Fig.1. SCADA data include measured values of various system operating state variables. Relevant data from the above-mentioned database archives are put together to form a combined dataset where system snapshots, as captured by the various SCADA measurements, are time-wise aligned with corresponding security indicators, computed from the WAMS measurements, and stored in a SCADA/WAMS archive.

Fig.1 further introduces three exemplary applications that leverage the combined data and that are explained in more detail in the following paragraphs. The numbering of these applications is not intended to imply a strict order, and intermediary steps and/or tools employed are elaborated further below.

### 1) Associate system Security Status with system Operating Point

With an objective to understand what are the important explanatory factors of insecure states, this application includes a) feature selection and feature reduction algorithms, to identify the most relevant operating state variables for each individual security indicator, and b) identification of those features via the training of models.

### 2) Predict security indicators

From the dataset in the SCADA/WAMS archive, regression and classification models are trained that link individual security indicators with the SCADA operating state variables. An expected security status may then be estimated for a given candidate system Operating Point (OP) determined by the SCADA operating state variables.

### 3) Correct insecure Operating Point

If an insecure OP is observed in real-time, a new OP that is expected to be secure and as similar to the current OP as possible is proposed, based on an efficient search of the space of candidate OPs. The new OP identified a) is secure according to the aforementioned trained models and b) is as similar as possible to the present OP according to a measure reflecting a cost of modification.

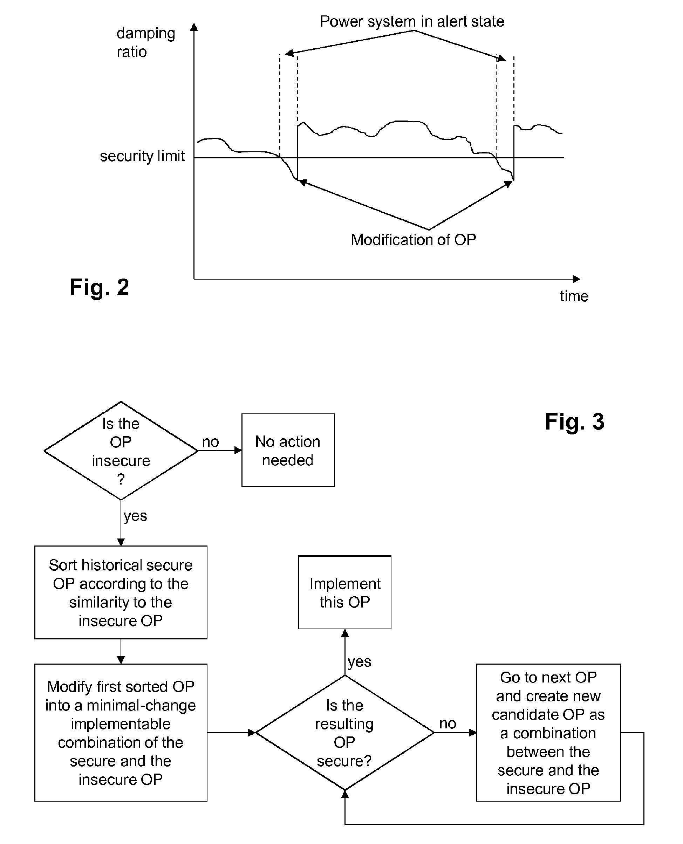

Fig.2 depicts the evolution over time of the damping ratio of a least damped oscillation mode as an exemplary security indicator, benefitting from a change in operating point following detection of an insecure system state. In short, with the WAMS doing "security monitoring", the trained models may be seen to do "security assessment", while the on-line corrective algorithm would qualify as "security enhancement".

The following tools and techniques are used to implement the aforementioned applications.

### A) Regression and Classification Models

The idea is to build models that receive SCADA operating state variables as input and give as output a) expected values of individual security indicators (regression models) or 2) the expected consolidated Security Status (SS) of the power system (classification models). Machine Learning (ML) algorithms are used for the training of the models from historical data, including support vector machines, neural networks, decision trees, random forests, (generalized) linear and (generalized) logistic regression, and ensemble methods (like bagging and boosting).

In order to achieve optimal performance, an ML algorithm and the corresponding model typically require proper tuning of associated parameters such as learning rates, regularization parameters, and parameters specifying which exact kernel to use from a family of kernels. At the same time, it is difficult to know in advance which of the many available algorithms would perform better for the problem at hand. Moreover some of the ML algorithms offer additional advantages to the end-user, such as the expected per-class probabilities of logistic regression, the easy-to-interpret visualization of decision trees, or the implicit feature importance measure of random forests. For all the aforementioned reasons, an ensemble of models is considered for each individual security indicator, with the parameters of each individual model being optimized by an iterative search procedure.

In order to train each individual model of the ensemble, an "intelligent search" is performed, covering the space of potential values that each model parameter can take. Suitable methods to perform the "intelligent search" are typically the various types of evolutionary algorithms or other global optimization methods (for example, simulated annealing or particle swarm optimization). In all these methods, a population of different instances of a model (i.e., with different values of the model parameters) is maintained and iteratively updated. The update depends on some quality or accuracy measure of the model, which is inherently computed in the procedure either by cross-validation or by separating the initial dataset into training and test sets.

Multiple criteria may be used as quality measures of the model, resulting in a multi-objective optimization problem. The aforementioned global optimization methods can handle such a problem. Exemplary criteria include minimizing the false positive hits (i.e. do not classify an insecure operating point as secure) while maximizing the overall model accuracy. Exemplary tunable parameters of the aforementioned optimization may be weights that are put on the error the model makes for different classes, typically penalizing a false positive error to a larger extent than a false negative error (i.e. it is more severe if the model wrongly classifies an operating point as being secure than as being insecure).

Depending on the amount of data on which the model training is based, different versions of the ML training algorithms may be called, making them more suitable and efficient for dealing with very large amounts of data. Stochastic gradient descent is a typical example. Various techniques that enable parallel execution of the model training are very suitable for working on big volumes of data.

### B) Feature Extraction

The idea is to identify which of the many attributes, SCADA operating state variables, or model input variables are the main explanatory factors of an individual security indicator or of the system security status as a whole. The objective is to find a "set of attributes" which altogether better correlate with the security indicators as the model output variables.

Filter or wrapper methods can be used for this purpose. If filter methods are used, the set of attributes are evaluated according to some information gain or correlation with the output variables criterion, while in the case of wrapper methods, the set of attributes are evaluated according to the performance of a regression/classification model trained on the specific set of input variables that are tested. In both cases, an iterative search algorithm progressively inserts or subtracts attributes from the subset of the most relevant ones.

The ensemble of models built as described in point (A) can be used in order to identify relevant attributes. After building a model, one can check the influence of each individual attribute to the prediction of the model by randomly modifying the value of this attribute in all entries of a test set and measure how much this influences the model prediction. The same procedure can be followed for all models of the ensemble, thus creating a sorting of the input attributes based on their significance in making a correct prediction. It is further worth noting that some models, such as random forests, have an inherent attribute evaluation property, via the so-called out-of-bag samples.

### C) Clustering

Clustering algorithms are used in order to represent many data samples by one representative data point (the center of a cluster can represent all data points in the cluster). In the security indicator prediction of application 2 the examples in the SCADA/WAMS archive can be clustered before training ML models, in order to reduce the size of data processed by the training algorithms. As data points close to the security boundary are expected to be more important for correct training than data points that are far inside the security region, the latter may be clustered, while all data points of the first category may be used individually for model training. In the correction of an insecure operating point of application 3, the secure examples in the SCADA/WAMS Archive can be clustered and represented by the clusters' centers in order to reduce the effective space that the search algorithm needs to search to come up with a suggested new secure operating point.

### D) Correct insecure Operating Point in real-time

The idea is to modify the operating state variables that can be controlled, for example, reschedule present and/or future power generation such that the modification cost is minimal while the new Operating Point (OP) is secure according to the regression/classification model(s) built for the security indicator prediction. Unfortunately, in many cases, this optimization problem may not be tractable in real-time.

Fig.3 is a flowchart of an alternative approach proposed in these cases. First, a similarity index is computed between the present insecure OP and all historical secure OPs from the SCADA/WAMS archive. The latter are then sorted according to this similarity index. The similarity index used should acknowledge the degrees of freedom that the operator has (i.e., what operating state variables may be changed in real-time) and reflect the cost of the modification. Finally, starting from the most similar historical OP according to the index, new candidate OPs are created as a combination of the secure historical OP and the current insecure state, keeping all non-controllable variables of the insecure OP unchanged and modifying the controllable ones progressively towards the values that they have in the secure OP. The already developed regression/classification models are used to validate the acceptability of the new candidate OPs. When one such candidate OP is found to be secure the algorithm stops. The found secure OP is then to be used as decision support for an operator that re-dispatches the system to bring it back to a secure state. If it turns out to be impossible for the given historical secure OP to be combined with the insecure one to give a secure new OP, then the algorithm proceeds with checking the next secure OP in the aforementioned sorted list.

### E) Distributed Computing Techniques

The idea is to employ distributed computing techniques to leverage parallelization for two reasons: This approach makes a) the proposed algorithms implementable (sequential execution on a single machine may be intractable for large amounts of data) and b) their execution faster simply by adding more computational resources (scalability property).

Precisely, parallelism is achievable in the following parts of the proposed tool:
1. Train ensemble of models: Each model can be trained independently of the others. For large input data, the initial dataset can be divided into smaller subsets and each model may be trained on one of these subsets.
2. Tune parameters for each specific model: As explained in point (A) this involves repeatedly training various realizations of one model type (each realization corresponding to different values of the model parameters). The various model instances can be trained in parallel. Synchronization is needed to perform each update of the parameters.
3. Extraction of relevant features: These algorithms typically involve the computation of some correlation measure between each specific attribute, or set of attributes, and the output variable(s). These computations can be performed in parallel, since they are independent of each other.
4. Clustering of operating points: Clustering involves computation of all operating points from all cluster centers, a process that can be parallelized (for example, each computer may compute the distances from one center).
5. Search space of candidate secure operating points to modify an observed insecure one: The procedure described in point (D) can be parallelized, having each machine investigating one secure historical OP, or having each machine investigate one specific combination between the present insecure OP and a secure historical OP.
6. Parallelizable versions of machine learning algorithms: Parallelizable implementations of various machine learning algorithms include "Parallel stochastic gradient descent", "Random feature maps for dot product kernels", "Streaming parallel decision trees" and allow the machine learning algorithms to run efficiently and in a scalable manner.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

The work leading to this invention has received funding from the European Community's Seventh Framework Programme (FP7/2007-2013) under grant agreement n° PIAP-GA-2009-251304.

## Claims

1. A method of operating a power system that is monitored, based on time-synchronized phasor data, by a Wide Area Monitoring System WAMS and controlled, based on operating state data, by a Supervisory Control And Data Acquisition SCADA system, the method comprising
- collecting phasor data and operating state data;
- calculating security indicator data from the phasor data;
- associating the security indicator data and the operating state data;
- training, by means of machine learning and based on the associated data, a model that links a security indicator to the operating state data;
- predicting, for a power system operating point determined by an operating state data instance, and based on the trained model, a value of the security indicator.

2. The method of claim 1, comprising
- observing, from current security indicator data, the power system to be in an insecure operating point;
- identifying a next operating point as being secure based on a value of the security indicator predicted for the next operating point; and
- operating the power system according to the operating state data instance of the next operating point.

3. The method of claim 2, the selecting step comprising
- identifying the next operating point among a plurality of secure candidate operating points as having a lowest cost of modification with respect to the insecure operating point.

4. The method of claim 1, comprising
- collecting the phasor data from Phasor Measurement Units PMUs and deriving the operating state from measured steady-state values of operating state variables including at least one of bus voltages and currents, power generation schedules, active and reactive power injections or withdrawals at substations, branch active and reactive power flows, device status and power system topology information; or
- collecting the phasor data and the operating state data from a dynamic simulation of the power system.

5. The method of claim 1, comprising
- identifying, for the trained model and among the operating state data, a most relevant operating state variable for the power system security indicator.

6. The method of claim 1, comprising
- training, by means of a first machine learning algorithm and based on the associated data, a first model that links the power system security indicator to a first plurality of operating state variables; and
- training, by means of a second machine learning algorithm and based on the associated data, a second model that links the power system security indicator to a second plurality of operating state variables.

7. The method of claim 1, comprising
- clustering of operating points and involving distributed computing techniques.

8. A power system operating device for operating a power system that is monitored, based on time-synchronized phasor data, by a Wide Area Monitoring System WAMS and controlled, based on operating state data, by a Supervisory Control And Data Acquisition SCADA system, connectable to a data archive comprising WAMS and SCADA data of the power system, and configured to execute the method of operating the power system as claimed in one of claims 1 to 7.
